# EUROPEAN PATENT SPECIFICATION

(11) **EP 0 504 313 B1**
(45) Date of publication and mention of the grant of the patent: **18.06.1997**
(21) Application number: 91902465.3
(22) Date of filing: 30.11.1990
(51) Int. Cl.: G01N 21/11, G01N 33/50, G01N 35/04, G01N 35/10, G01N 35/02

(54) **SAMPLE HANDLING SYSTEM FOR AN OPTICAL MONITORING SYSTEM**
PROBENTRANSPORTSYSTEM FÜR OPTISCHES ÜBERWACHUNGSSYSTEM
SYSTEME DE MANIPULATION D'ECHANTILLONS POUR SYSTEME DE CONTROLE OPTIQUE

(30) Priority: 01.12.1989 US 443951
(43) Date of publication of application: 23.09.1992
(73) Proprietor: Akzo Nobel N.V., 6824 BM Arnhem (NL)
(72) Inventor: HULETTE, William, Chester, Jr., Hillsborough, NC 27278 (US); KARP, Joseph, George, Durham, NC 27712 (US); CALLAHAN, Janet, Black, Carrboro, NC 27519 (US); BRAUN, Paul, Joseph, Durham, NC 27712 (US); RICHARDSON, Stephen, Durham, NC 27705 (US)
(74) Representative: Hermans, Franciscus G.M.
(86) International application number: US9006992
(87) International publication number: WO9108464

(56) References cited:
- EP-A- 0 074 102
- EP-A- 0 192 957
- EP-A- 0 212 663
- DE-A- 3 839 080
- FR-A- 2 331 785
- JP-A- 1 240 861
- JP-A-60 188 849
- US-A- 3 985 508
- US-A- 4 483 927
- US-A- 4 527 438
- US-A- 4 727 033
- US-A- 4 767 716
- US-A- 4 834 944
- US-A- 4 861 554
- US-A- 4 863 690
- IEEE TRANSACTIONS ON BIOMEDICAL ENGINEERING, vol.33, no.6, June 1986, US pages 610 - 616 SEEBAUGH ET AL. 'automated device for aseptically aspirating serum ...'

## Description

### CROSS REFERENCE TO RELATED APPLICATIONS

This application is related to the following concurrently filed and copending U.S. Patent Applications, which are owned by the Assignee of the present Application, and the disclosures of which are incorporated herein by reference:
(1) Serial No. 07/443,952, to Swope et al entitled "Multichannel, Optical Monitoring Systems";
(2) Serial No. 07/443,956, to Karp et al entitled "Cuvette and Linear Drive Mechanism Therefor"; and
(3) Serial No. 07/443,954, to Hoffman et al entitled " Apparatus and Method for Cleaning Reagent Delivery Probes."

### BACKGROUND OF THE INVENTION

The present invention relates to a sample handling system for an optical monitoring system, and more particularly, to an automated sample handling system for an optical evaluation instrument which includes optical monitoring means for monitoring changes in optical characteristics of a reaction volume in a reaction well of a cuvette when the cuvette is positioned in the optical path of the optical monitoring means.

Automated sample handling systems for optical evaluation instruments are known which automatically dispense patient fluid samples, such as blood plasma, along with reagents and other additives, into the reaction well of a cuvette which is then automatically positioned in the optical path between a light source and a detector for monitoring changes in the optical characteristics in the reaction volume of the cuvette as the reaction is allowed to progress over time. Such instruments are useful in the field of biochemical analysis for measuring blood plasma coagulation time and performing factor and other chromogenic assays and related analyses.

An automated sample handling system in an optical evaluation system of this type is described by Nelson L. Alpert, Ph.D., in the Spotlight section of "CIS", a publication by Clinical Instruments Systems, Inc., Volume 9, number 5, May, 1988, pages 1 to 7. The system described by Alpert is based upon principles of centrifugal analysis whereby patient plasma samples and reagents are automatically dispensed into radial chambers of a rotor. The chambers serve both as reaction vessels and as photometric cuvettes. The cuvettes spin through the optical path of a fixed photometer. An optical beam illuminates each cuvette from beneath the rotor and a detector above the rotor collects the light signals from each of the cuvettes in sequence. The optical data are collected and analyzed by the system's computer.

In this system, the automatic dispensing of samples and reagents is accomplished by a single probe arm which has sample and reagent probes. At the beginning of a run, the probe arm rotates to aspirate a sample on a sample tray which accommodates 20 sample cups, one of which is reserved for a calibration plasma or a normal pool sample, and a second for diluent. This leaves room for as many as 18 samples. The rotor likewise has 20 reaction vessels. After aspirating a sample, the probe arm rotates to a reagent reservoir for a test programmed for the sample just aspirated and aspirates a reagent from the reservoir. There are three reagent reservoirs each comprised of a reagent cup which are maintained at about 15°C. The probe arm is next positioned over a reaction vessel in the rotor to dispense both the sample and reagent into the reaction vessel. After a washing process the probe arm repeats the sequence for dispensing sample and reagent into respective reaction vessels until all of the reaction vessels for the particular run are loaded. The rotor is then spun up and the reactants in each radial pathway are spun to a chamber near the circumference of the rotor where the samples spin through the optical path of the photometer. The analytical time after a rotor receives samples and reagents is the same whether a single sample is run singly or in duplicate or the rotor is completely filled with samples. That is, a whole batch of up to 18 samples is analyzed in the same time as a single sample.

While the above-described system provides a certain amount of automation and flexibility to the handling of samples in an optical evaluation instrument, it still has a number of drawbacks. To begin with, the plasma, which is prepared in a separate centrifugation process, must first be transferred from the centrifugated test tube into a sample cup of the sample tray. When the centrifugated test tube comprises an evacuated sample collection tube sealed by a septum, which is now common, this requires either removing the septum or piercing the septum and aspirating a desired amount of plasma out of the collection tube and then dispensing the aspirated plasma into a sample cup of the sample tray. This must be done for each patient plasma sample loaded into the sample tray. This process poses contamination problems, both to the patient samples and to the clinical worker performing the transfer process. It would therefore be preferable if a sample handling system could be designed to eliminate the above-described transfer process by incorporating a mechanism which could remove a patient plasma sample from an evacuated and spun down test tube containing a patient's blood plasma with the septum intact and transfer the patient plasma sample directly to the reaction well of a cuvette without human intervention.

Another drawback of the above-described system is its limited throughput. The rotor only contains 20 reaction vessels, and only a maximum of 18 of these reaction vessels can be used for patient samples. Additionally, only one type of test may be performed on any one run of the rotor. It often occurs, therefore, that some of the available reaction vessels remain unused on a given run. Further, an operator must program the instruments' computer with the identification of each sample and the test to be performed, which further adds to the total analysis time.

A further drawback of the above-described system is that it essentially requires the attendance of a full-time operator. Because the system only runs a maximum of 18 patient samples during any one run, an operator must be present at the conclusion of each run, which may take anywhere from approximately three to eleven minutes, depending on the test being performed, to replace the sample tray with a new sample tray and set the machine up for the next run. It would be desirable to have a sample handling system with equivalent or better throughput of patient samples with walk-away automation on the order of one or more hours, thereby freeing the operator to perform other tasks.

Yet, another drawback of the above-described system is that it can accommodate a relatively limited number reagents at any one time and further, only the reagents are temperature controlled. The lack of temperature control for the patient samples provides an inherent limitation on the number of samples that can be run at any one time since the patient samples must be kept cool just prior to the analysis, at which time the patient samples must be brought up to body temperature.

### SUMMARY OF THE INVENTION

It is therefore an object of the invention to provide a sample handling system for an optical evaluation instrument that can handle a high throughput of patient samples with a high degree of versatility, adaptability and reliable automation.

It is a further object of the invention to provide walk-away automation for a sample handling system for an optical evaluation instrument, once patient samples still sealed in the original evacuated collection tube are loaded into the system.

The above and other objects are accomplished according to the invention in the context of a sample handling system for an optical evaluation instrument which includes optical monitoring means having an optical path for monitoring changes in optical characteristics of a reaction volume in a reaction well of a cuvette when the cuvette is positioned in the optical path of the optical monitoring means, including: cuvette storage for storing a plurality of cuvettes, each cuvette containing a plurality of reaction wells; a temperature controlled housing for storing a plurality of reagent containers, each containing a respective reagent, and a plurality of sample collection tubes, each containing a fluid sample and presenting a optically readable code identifying the sample and a test to be performed on the sample; a programming station including for optically reading the code presented by the respective collection tubes for programming the instrument with a test to be performed on the sample contained in a respective one of the sample collection tubes; a sample insertion station including a mechanism for aspirating sample from the sample collection tubes and for dispensing the aspirated samples into respective ones of the reaction wells of the cuvettes; a reagent station, including a reagent handling mechanism for aspirating selected amounts of selected reagents from selected reagent containers and for dispensing the aspirated reagents into a reaction well of a cuvette according to the programmed test for the sample in that reaction well, the reagent and sample in the reaction well forming a reaction volume which exhibits optical characteristics to be monitored by the instrument; a first transporting device for transporting the sample collection tubes in seriatim first to the programming station and then to the sample insertion station; and a second transporting device for transporting the cuvettes through the sample insertion station, the reagent station, and on to the optical monitoring device where the optical characteristics of the reaction volume of the in the respective reaction wells can be monitored.

According to a preferred embodiment of the invention, the sample collection tubes are evacuated and sealed by a septum, and a piercer is provided at the sample insertion station for piercing the septums of the respective evacuated sampling tubes to permit access by a sampling probe to aspirate sample from the sample collection tubes.

According to another aspect of the invention, the temperature controlled housing maintains the temperature of the evacuated collection tubes and the reagent containers between 4°C and 8°C. Further, the second transporting device preferably includes a linear track for guiding the cuvettes and a drive mechanism for periodically moving the cuvettes along the track in discrete increments. Preferably, the drive mechanism includes a lead screw and the cuvettes are each shaped for engaging the lead screw for being driven along the linear track in the manner described in the above referenced Karp et al application. According to yet a further aspect of the invention the cuvette storage includes a device for removing the cuvettes from the storage and placing the cuvettes onto the linear track. Additionally, the first transporting device preferably includes a plurality of shuttles each for holding a plurality of sample collection tubes and means for moving the shuttles through the programming and sample insertion stations.

According to yet another aspect of the invention, a method is provided for handling samples using the foregoing sample handling system.

Other details and advantageous features of the invention will become apparent from the following description when taken in connection with the accompanying drawings and the appended claims.

### BRIEF DESCRIPTION OF THE DRAWINGS

Figure 1 is a schematic top elevation of a sample handling system in a optical evaluation instrument according to the invention.

Figure 2 is a schematic front elevation of Figure 1.

Figure 3 is a schematic right-side elevation of Figure 1.

Figure 4 is a schematic right-side elevation of the cuvette storage device of Figure 1.

Figure 5 is a top elevation of the reagent container block of Figure 1.

Figure 6 is a side elevation of Figure 5.

### DETAILED DESCRIPTION OF THE PREFERRED EMBODIMENT

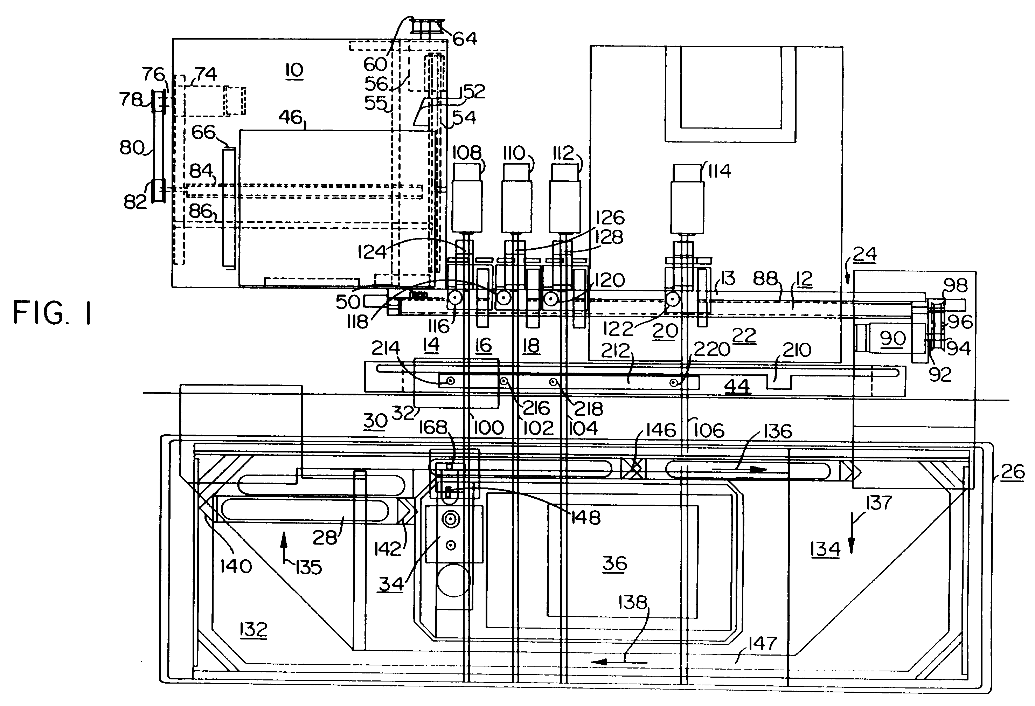

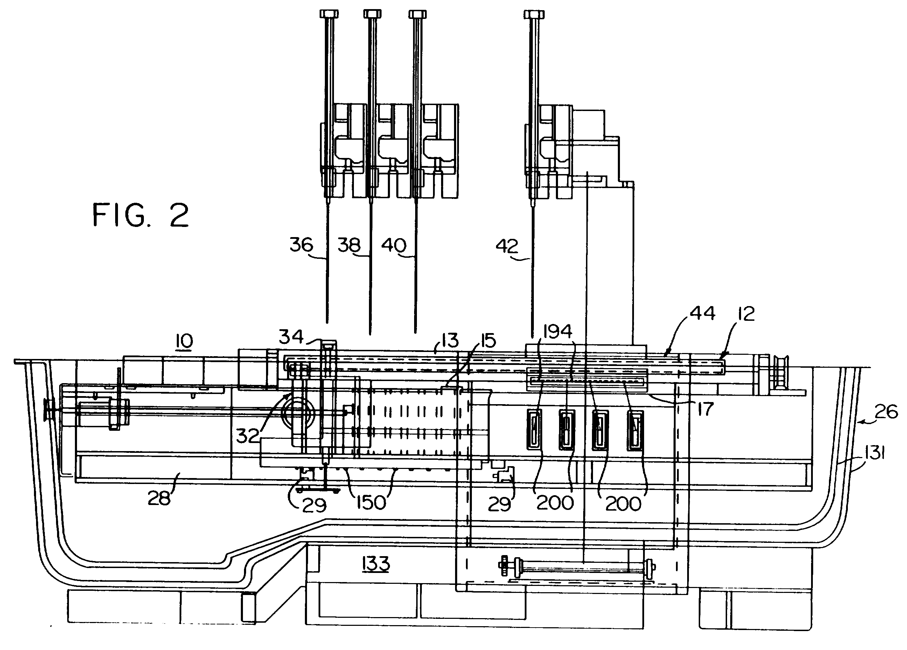

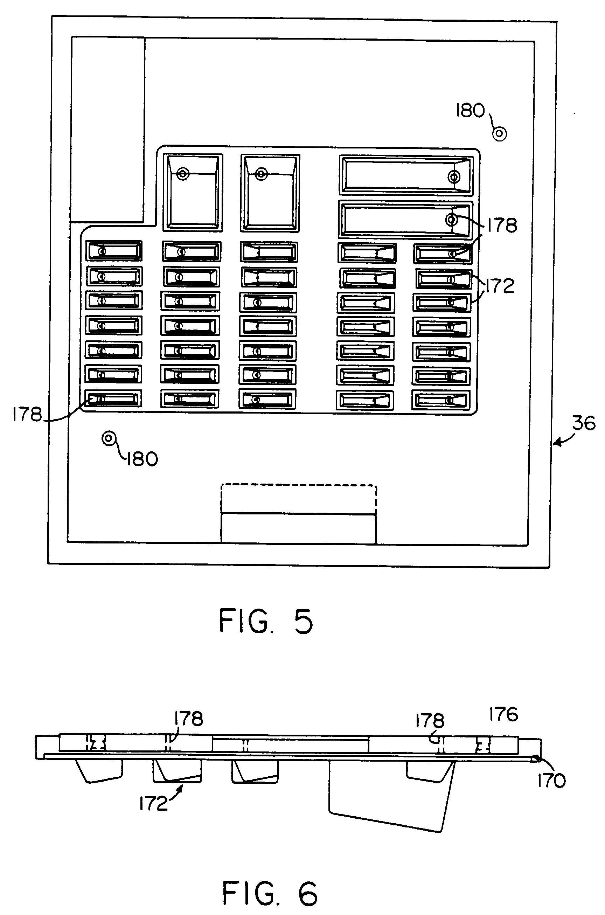

Referring to Figure 1, there is shown an optical evaluation instrument incorporating a sample handling system according to the invention. The principal elements of the sample handling system include a cuvette storage and loading mechanism 10, for supplying cuvettes individually to a cuvette transport mechanism 12, which advances the cuvettes along a linear track 13 through a sample insertion station 14, a plurality of reagent insertion stations 16, 18 and 20, an optical monitoring station 22 and finally, to a cuvette disposal station 24. The sample handling system additionally includes a refrigerated housing 26, for storing a plurality of evacuated collection tubes (not shown), which are transported via shuttles 28 through a programming station 30, including a bar code reader 32, for reading a preprinted bar code printed on the side of each evacuated collection tube identifying the test sample and the test to be performed, and onto sample insertion station 14, which includes a piercer 34, for piercing the septum of an evacuated collection tube for allowing a sample probe 36 (see Figure 2) to be lowered into the sample collection tube for aspirating a fluid sample which is to be ejected into a reaction well of a cuvette located at sample insertion station 14, as described in greater detail herein below. Refrigerated housing 26, additionally encloses a reagent chamber 36, which stores a plurality of reagent containers (see Figures 5 and 6), which can be accessed by reagent probes 38, 40 and 42 (see Figure 2), for aspirating selective reagents and injecting them into reaction wells located at the respective reagent insertion stations 16, 18 and 20. As used herein, reagents include any reagent, diluent, buffer, or activator which is required for any given biochemical test being performed on the patient sample according to a preprogrammed test protocol. A probe washing station 44, is provided for washing the sample and reagent probes after each dispensing action.

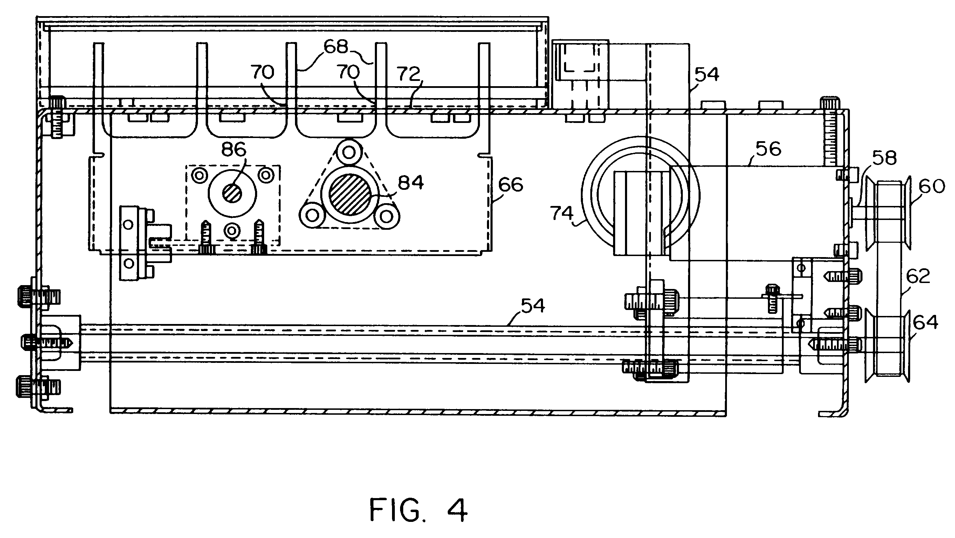

Referring to Figures 1 and 4, cuvette storage device 10 includes a cassette frame 46, for receiving a cassette of cuvettes arranged in the cassette in columns parallel to the right and left hand sides of frame 46 in Figure 1. The cassettes are preferably of the type described in concurrently filed and copending U.S. patent application Serial No. 07/443,956, to Karp et al. and assigned to the owner of the present application. A plan view of one such cuvette 50 is seen in a loading position with respect to cuvette transport mechanism 12. A pusher arm 52, driven by a lead screw 54, loads cuvettes onto cuvette transport mechanism 12. A motor 56, whose shaft 58, is connected with a pulley 60 rotates a driving belt 62 which turns a pulley 64 for driving lead screw 54. A fixed guide rod 55 is provided in the usual manner for providing guidance and additional support for pusher arm 52. After a column of cuvettes is completely loaded onto cuvette transport mechanism 12, pusher arm 52 is retracted and a new column of cuvettes is moved rightwardly (in Figure 1) by way of a cassette column drive mechanism to be in line with pusher arm 52. The cassette column drive mechanism includes a plate 66, provided with fingers 68, extending through slots 70 in a bottom support 72 of cassette frame 46. A rectangular plate (now shown), is positioned between fingers 68 and the left-hand most column of cassettes (not shown) in frame 46 for pushing the cassette columns in a rightward direction in Figure 1. Plate 66 is driven by way of a motor 74 whose shaft 76 is connected to a pulley 78 which turns a driving belt 80 connected to a further pulley 82 which turns a lead screw 84, whose threads engage with plate 66. A fixed guide rod 86, is provided parallel to lead screw 84, for guiding plate 66 in the usual manner.

Cuvette transport mechanism 12, includes a lead screw 88, which is driven by way of a motor 90 whose shaft 92 is connected to a pulley 94 for turning a belt 96 which is connected for driving a pulley 98 connected to lead screw 88. The cuvettes are each provided with an engaging means, such as a rib having the same pitched angle as the threads of lead screw 88 which engage the lead screw threads when placed in a loading position by pusher arm 52. A cuvette 50 is shown in the loading position engaging lead screw 88. Cuvettes of this type, which desirably have four reaction wells, as shown by cuvette 50, are disclosed in the aforementioned copending patent application Serial No. 07/443,956, to Karp et al. Once engaged with lead screw 88, the cuvettes are advanced in a rightward direction in Figure 1 along linear track 13 through the various stations as described herein for injecting a sample volume and reagents to create a reaction volume to be optically monitored at the optical monitoring station. Desirably, linear track 13 is temperature controlled for controlling the temperature of the contents of the cuvette reaction wells. For this purpose, linear track 13 is cooled on the left side of a heat flow restriction 15 shown in Figure 2 by way of, for example a Peltier device (not shown) to maintain the temperature of the reaction well contents at about 15°C. On the right hand side of heat flow restriction 15, linear track 13 is heated by way of a heating element 17, such as a resistive heat tape, applied to the under side of the linear track for maintaining the temperature of the reaction well contents at body temperature. Control signals for controlling motors 56, 74, and 90, for turning respective lead screws 54, 84 and 88, to accomplish the required incremental movements of pusher arm 52, plate 66, and cuvette 50, respectively, are received from a central controller (not shown) of the instrument in a manner well understood by those skilled in the art.

Sample probe 36, and reagent probes 38, 40 and 42 are controllably moved along a horizontal path by way of respective lead screws 100, 102, 104 and 106, driven by respective motor assemblies 108, 110, 112 and 114. Vertical movement for lowering and raising sample probe 36, and reagent probes 38, 40 and 42, is accomplished by way of respective vertical gear racks 116, 118, 120 and 122, driven by corresponding vertical motor and pinion assemblies 124, 126, 128, and 130, respectively. Horizontal lead screw motors 108, 110, 112 and 114, and vertical rack and pinion motors 124, 126, 128 and 130, are selectively controlled by signals received from the instrument controller (not shown) for controlling the horizontal and vertical movement of the respective probes for aspirating and dispensing sample and reagents according to the test protocol identified from the bar code of a given sample collection tube read by bar code reader 32. Sample and reagent aspiration and dispensing by probes 36, 38, 40 and 42 is accomplished by way of positive displacement pumps (not shown) connected to the respective probes in a manner understood by those skilled in the art.

Refrigerated housing 26, comprises a double walled insulated enclosure 131, and a cooling system 133, preferably of the ducted type, for circulating cooling air within housing 26 for maintaining the temperature of sample collection tubes (not shown) mounted in shuttles 28 and reagents in reagent chamber 36 at a temperature between 4° and 8°C.

Referring to the plan view shown in Figure 1, refrigerated housing 26, has left and right chambers 132 and 134, respectively, connected by passages 146 and 147 for storing and transporting shuttles 28, which are caused to move in a clockwise direction, as shown by arrows 135 to 138. Each shuttle 28 is provided with means for carrying a plurality of evacuated sample collection tubes of the type, for example, made by Beckton Dickinson of Rutherford, New Jersey, and sold under the brand name Vacutainer. The configuration of shuttles 28, and the mechanism for transporting the shuttles is disclosed in detail, for example, in U.S. Patent No. 3,418,084 to Allington.

Briefly, each shuttle 28 has complimentary camming surfaces 140 and 142 formed at the opposite ends thereof. Shuttles 28 are disposed in rows in the respective chambers 132 and 134. A drive mechanism (not shown) comprising gears which mesh with gear tracks 29 on the bottom of the shuttles 28 (Figure 2), drive the shuttles through passages 146 and 147 in opposite directions. The shuttle drive mechanism causes a driven shuttle to push the shuttle in front of it and the camming surfaces effect a lateral displacement in the manner described by the above-referenced patent to Allington.

The shuttles are transported, one behind the other, in passages 146, so that the evacuated collection tubes are passed first through programming station 30 where bar code reader 32 reads a previously-applied bar code on the side of the evacuated collection tube to identify the sample and the test to be performed. The information read by bar code reader 32 is fed to the instrument controller (not shown) for controlling subsequent movement of the sample and reagent probes for filling a reaction well of a cuvette transported by cuvette transporting mechanism 12 through the respective sample and reagent stations.

After having its bar code read, the evacuated collection tube is moved, by way of the shuttle and shuttle drive mechanism, a precise distance to place the evacuated collection tube in line with piercer 34. The precise positioning of the shuttle is accomplished by way of an electro-optical sensing mechanism 148 (Figure 1), which passes a sensing beam through spaced passages 150 (Figure 2), provided in the base of shuttles 28, for sensing when the shuttle is in the appropriate position.

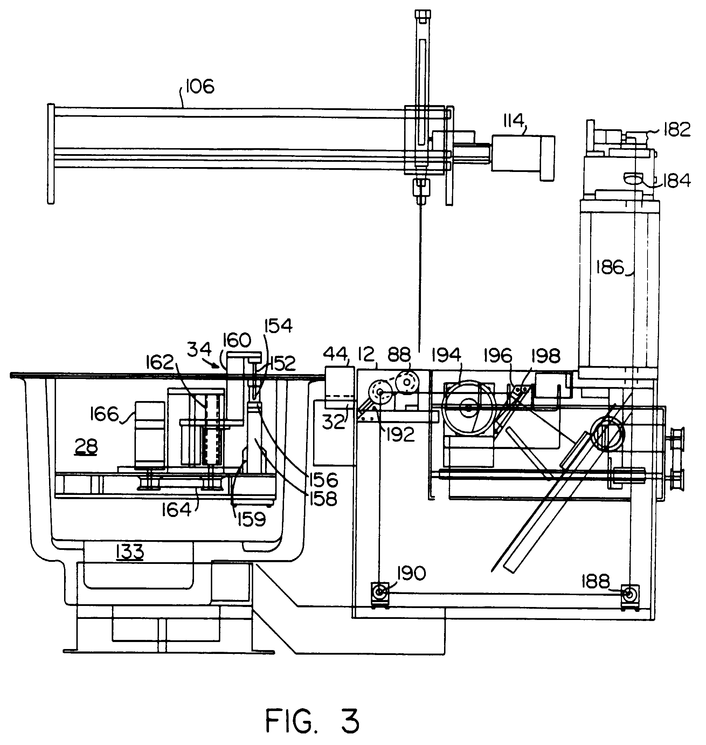

Referring to Figure 3, piercer 34 includes a piercing tube 152 having a sharp angled end 154, canted at approximately the same angle as the tip of a conventional hypodermic needle, for piercing a septum 156 of an evacuated collection tube 158. Piercing tube 152 is mounted in a support 160 which engages a vertical lead screw 162 which is connected by way of a belt and pulley system 164 to a motor 166 for driving lead screw 162. With appropriate movement of lead screw 162, piercing tube 152 is caused to be lowered for piercing septum 156 or to be removed therefrom. A holding mechanism 159 holds tube 158 in place while piercing tube 152 is inserted and withdrawn. Piercer 34 has an opening 168 (Figure 1) at the top concentrically aligned with piercing tube 152, so that when sample probe 36 is aligned with piercing tube 152 a pathway is provided for lowering the sample probe into an evacuated collection tube 158, for aspirating a fluid sample therefrom.

Reagent chamber 36 is shown in greater detail in Figures 5 and 6. As shown in these Figures, a reagent container support plate or tray 170, is provided for supporting a plurality of reagent containers or cups 172, of varying capacities. A reagent cover 176, of approximately 1.3 cm (one half inch) thickness, is placed over reagent container support plate 170. Reagent cover 176 is provided with reagent probe holes 178 positioned above respective ones of reagent containers 172. Probe holes have a diameter (approximately 3mm) slightly larger than the diameter of reagent probes 40 and 42 for permitting the probes to be lowered into selected ones of the reagent containers. Reagent cover 176 serves as an anti-evaporation cover for retarding or preventing evaporation of the reagents in reagent containers 172 while still allowing access to the reagents through probe holes 178. The anti-evaporation cover additionally serves to retard rapid temperature shifts by providing a barrier between different temperature zones. Although there are multiple holes in the anti-evaporation cover, it is of sufficient depth to provide the tortuosity necessary to retard or prevent evaporation of liquids. Desirably, reagent cover 176 is provided with locator pins 180 for accurately positioning the cover over the reagent containers and in alignment with the horizontal tracks of reagent probes 38, 40 and 42.

Probe washing station 44, comprises a trough 210, containing a cleaning solution such as bleach. An additional trough 212 is provide for receiving waste fluids and cleaning solution from the probes during the washing process. Trough 212 is provided with a plurality of riser platforms 214, 216, 218 and 220, each containing a concave recess and serving as a deflector for fluid and cleaning solution expelled from a probe. After a probe dispenses its fluid into a reaction well in a cuvette, and before the probe is positioned to aspirate sample or reagent as the case may be, the probe is positioned over trough 210 for aspirating cleaning solution. The probe is then positioned over the corresponding deflector where primer fluid, such as water, is forced through the probe interior for expelling the cleaning solution, followed by primer liquid, against the deflector thereby creating a fountain effect which washes the outside of the probe. The waste solutions are captured by trough 212 and vented away through a waste outlet (not shown). A more detailed description of probe washing station 44 is described in co-pending and concurrently filed U.S. patent application Serial No. 07/443,954, to Hoffman et al.

Optical monitoring station 22 comprises a multichanne 1 optical monitoring system of the type described in detail in the above-mentioned copending U.S. patent application Serial No. 07/443,952 to Swope et al. Briefly, and with reference to Figures 2 and 3, the optical monitoring system includes a broad band light source 182, which passes light through a slit (not shown). A collimating lens 184, collimates the beam to form a slowly diverging beam 186 which is folded by reflecting mirrors 188, 190 and 192. Following mirror 192 is a mask (not shown), which includes a plurality of linear-ally spaced apertures for dividing beam 186 into a corresponding number of beams, each defining an optical path or channel 194, as schematically illustrated in Figure 2. The optical paths or channels 194 are linearally spaced along the track of cuvette transport mechanism 12 so that each reaction well of a cuvette passes from channel-to-channel as cuvette transport mechanism 12 incrementally advances the cuvettes along the linear path. The light beams passing through the reaction wells of the cuvettes are passed through a rotating shutter 194 which sequentially passes the light beams to diffraction gratings 196 where the beams are diffracted and focused by focusing lenses 198 onto respective photodiode arrays 200 which are subsequently electronically scanned for reading electronic signals which correspond to the spectral distribution of the beams transmitted by the respective reaction volumes contained in the reaction wells of the cuvettes. In one specific implementation, the optical monitoring system includes 20 channels, and the rotating shutter operates to sequentially pass the beams within groups of five beams, so that only one beam from each group of five beams is passed onto a photodiode array at any one time. The focusing lenses operate to focus each group of five beams onto a respective one of photodiode arrays 200.

The operation of the sample handling system will now be described in the context of one specific implementation of the invention, it being understood that the invention is not limited to this particular implementation.

Operation of the sample handling system according to the invention is centered on linear track 13 along which cuvettes are advanced from station to station by lead screw 88. The basic timing and sequencing of the system is based on advancing the cuvettes along the linear track a distance equal to the distance between successive reaction wells.

Initially, an operator loads cuvettes into the instrument by placing a cassette of cuvettes into cassette frame 46. Each cassette holds, for example, 120 cuvettes. The cuvettes are automatically moved from the cassette onto linear track 13 by arm 52 where they engage lead screw 88. Each cuvette preferably has four 0.63 cm (1/4 inch) reaction wells. Lead screw 88 is activated every fifteen seconds to move the cuvettes in 0.63 cm (0.25 inch) increments in 0.1 seconds. The instrument controller monitors each cuvette by the timing associated with the lead screw. Lead screw 88 advances the cuvettes to the first station, i.e., sample insertion station 14, where a sample is delivered to a reaction well aligned with sample probe 36. Two minutes later, the load reaction well of the cuvette arrives at the first reagent delivery probe 38 where diluent or a reagent is added, depending on the test being carried out. The second reagent probe 40 is located at the four minute position where an activator can be added. Five minutes later the loaded reaction well of the cuvette reaches the third reagent probe 42 where a reagent is added and the reaction monitoring begins. The reaction is monitored electro-optically by optical monitoring system 22 which measures changes in the optical transmission of the reaction volume as the clot forms or as the chromometric reaction proceeds. As the cuvette is moved along the track, the optical monitoring continues for twenty consecutive stations, that is, for 300 seconds. Following the optical monitoring station the cuvette leaves the track and is sent to a waste container (not shown).

Patient plasma samples are stored in refrigerated housing 26 in the original evacuated blood collection tubes used to obtain the patient's sample which has been previously spun down to obtain the plasma and bar-coded for patient identification and test protocol to be performed. The evacuated sample collection tubes are placed in the holders of shuttles 28 and advanced by the shuttle drive mechanism to the bar code reader. The evacuated sample collection tubes can be arranged in any order since the bar code on each sample collection tube allows the instrument to automatically correlate a patient with a given sample. The bar code read by bar code reader 32 also programs the instrument controller for determining the amount of sample to be aspirated by sample probe 36, the number of reaction wells to be filled with the sample, and the amounts and types of reagents/ buffers/additives/activators to be injected into the respective reaction wells by reagent probes 38, 40 and 42. Subsequent to programming station 30, a sample collection tube is advanced to piercer 34 where piercing tube 152 is caused to pierce the septum of the evacuated sample tube to allow sample probe 36 to be lowered into the sample collection tube to aspirate a programmed amount of sample. Sample probe 36 is next removed from the evacuated sample collection tube and horizontally moved over a reaction well positioned at sample insertion station 14 and lowered into the reaction well where a programmed amount of sample is expelled into the reaction well. The evacuated sample collection tubes can be removed from refrigerated housing 26 at any time after sample aspiration is complete; however, because the samples are maintained at lowered temperatures, they can be retained for further testing without having to be immediately removed from its shuttle. Reagent chamber 36 stores various controls, diluents, activators and reagents. In one implementation of the system up to twenty-two containers of these materials are stored in reagent chamber 36. All containers are held to a temperature of about 7° C and the reagents are heated, if necessary, in the reagent probe as they are being dispensed.

Pumping in all cases is performed with positive displacement syringe pumps operatively connected with respective ones of the probe. No manipulation of pump tubing is required as is the case with peristaltic pumps. A reagent is dispensed into a reaction well in a manner that promotes mixing with the sample and other contents of the reaction well. The reagent temperature and volume are controlled by the instrument controller.

Desirably, fluid level sensing is utilized to control the height of a reagent probe relative to the level of a reagent in its container and relative to the contents of a reaction well. This permits bringing the outside of a probe into contact with a minimum quantity of reagent. This, in turn, reduces the possibility for carry-over. Additionally, level sensing is used to control the height of a probe above the fluid level while dispensing in order to minimize carry-over and to maximize mixing.

It will be understood that the above description of the present invention is susceptible to various modifications, changes and adaptations, and the same are intended to be comprehended within the meaning and range of equivalents of the appended claims.

## Claims

1. A sample handling system for an optical evaluation instrument which includes optical monitoring means (22) having an optical path (194) for monitoring changes in optical characteristics of a reaction volume in a reaction well of a cuvette (50) when the cuvette is positioned in the optical path of the optical monitoring means, comprising:
cuvette storage means (10) for storing a plurality of cuvettes (50), said cuvettes containing a plurality of reaction wells;
a temperature controlled housing (26) for storing a plurality of reagent containers (172) each containing a respective reagent, and a plurality of sample collection tubes (158), each said sample collection tube containing a fluid sample and presenting an optically scannable code identifying the sample and a test to be performed on the sample;
a programming station (30) including optical scanning means (32) for reading the code presented by the respective sample collection tubes (158) for programming the instrument with a test to be performed on the sample contained in a respective one of said sample collection tubes;
a sample insertion station (14) including means (36) for aspirating a portion of the sample from respective ones of said sample collection tubes and for dispensing the aspirated sample portion into a reaction well of a cuvette;
a reagent station (16, 18, 20) including reagent handling means (38, 40, 42) for aspirating selected amounts of selected reagents obtained from said reagent containers into a reaction well of a cuvette (50) according to the programmed test for the sample in that reaction well, the reagent and sample in the reaction well forming a reaction volume which exhibits optical characteristics to be monitored by the instrument;
first transporting means for transporting the sample collection tubes (158) in seriatim first to said programming station (30) and then to said sample insertion station (14); and
second transporting means (12) for transporting said cuvettes (50) in seriatim through said sample insertion station (14) and said reagent station (16, 18, 20) and on to the monitoring means (22) for monitoring the optical characteristics of the reaction volume in the respective reaction wells.

2. The sample handling system as defined in claim 1, wherein said temperature controlled housing (26) maintains the temperature of said sample collection tubes (158) and said reagent containers (172) between 4°C and 8°C.

3. The sample handling system as defined 1, wherein said second transporting means (12) comprises a track (13) for guiding the cuvettes (50) and drive means (88, 90, 92) for periodically moving said cuvettes along said track in discrete increments.

4. The sample handling system as defined in claim 3, wherein said cuvette storage means (10) includes removal means (52) for removing said cuvettes from said storage means and placing said cuvettes onto said track (13).

5. The sampling handling system according to claim 3, wherein said track (13) is a linear track.

6. The sample handling system as defined in claim 5, wherein said second transporting means (12) includes a lead screw (88) and said cuvettes (50) each include an engaging means for engaging the threads of said lead screw so that said cuvettes can be driven by said lead screw along said linear track (13).

7. The sample handling system as defined in claim 1, wherein said first transporting means includes a at least one shuttle (28) including means (159) for holding a plurality of sample collection tubes (158), and means for moving said at least one shuttle (28) through said programming (30) and sample insertion (14) stations.

8. The sample handling system as defined in claim 1, wherein said sample collection tubes (158) comprise evacuated sample collection tubes each vacuum sealed with a septum (156), and said sample insertion station (14) includes piercing means (34) for piercing the septum (156) sealing respective ones of said sample collection tubes (158).

9. The sample handling system as defined in claim 8, wherein said sample aspirating means includes a hollow sample probe (36); and said piercing means (34) includes a piercing tube for piercing the septum (156) of respective ones of said sample collection tubes and creating a pathway for allowing said sample probe (36) access to the interior of said sample collection tube (158) for aspirating a sample portion from said sample collection tube.

10. The sample handling system as defined in claim 1, and further including means (17) for heating the reaction volume in a reaction well of a cuvette (50) to body temperature.

11. The sample handling system as defined in claim 10, wherein said second transporting means (12) comprises a linear track (13) along which said cuvettes (50) are advanced and said heating means (17) includes means for heating a portion of said linear track, the reaction volumes in said cuvettes being heated by way of heat conveyed from said linear track (13).

12. The sample handling system as defined in claim 1, wherein said reagent handling means includes reagent probes (38) for aspirating and dispensing reagent and said reagent station further includes a plate (176) covering said reagent containerst (172), said plate including probe hole (178) aligned with respective ones of said reagent containers for creating a pathway for said reagent probes (38, 40, 42) to access reagent in said reagent containers.

13. The sample handling system as defined in claim 12, wherein the probe (178) said plate a diameter slightly large than the diameter of said reagent probes (38, 40, 42) and said plate (176) has sufficient thickness to effectively prevent evaporation of the reagents from said reagent containers and to retard temperature shifts of the reagents in said reagent containers.

14. The sample handling system as defined in claim 1 forming a combination with an optical monitoring means (22) having at least one optical path (194) for monitoring changes in optical characteristics of reaction volumes in respective reaction wells of said cuvettes (50), said second transporting means (12) moving said cuvettes (50) to place the reaction wells of said cuvettes in said at least one optical path (194) of said optical monitoring means.

15. The sample handling system as defined in claim 14, wherein said optical monitoring means (22) includes a plurality of optical channels (194) each having an optical path (194) along which optical characteristics are monitored, said optical paths (194) being arranged one after the other and transverse to the direction in which said cuvettes (50) are moved by said second transporting means (12) and said second transporting means moving said cuvettes to advance said reaction wells from one optical channel (194) to the next so that the reaction volumes can be optically monitored in each optical channel (194).

16. A method of handling samples for an optical evaluation instrument which includes optical monitoring means (22) having an optical path (194) for monitoring changes in optical characteristics of a reaction volume in a reaction well of a cuvette when the cuvette is positioned in the optical path of the optical monitoring means, comprising:
storing a plurality of cuvettes (50) each containing a plurality of reaction wells;
storing in a temperature controlled housing (26) a plurality of reagent containers (172) each containing a respective reagent and a plurality of sample collection tubes (158), each sample collection tube containing a fluid sample and presenting an optically scannable code identifying the sample and a test to be performed on the sample;
transporting he sample collection tubes (158) to a programming station (30) and optically reading the code presented by respective ones of the sample collection tubes for identifying the sample collection tubes and for programming the instrument with a test to be performed on the samples contained in respective ones of the sample collection tubes;
transporting the cuvettes (50) to a sample insertion station (14);
transporting the sample collection tubes (158) from the programming station (30) to the sample insertion station (14) for aspirating a portion of the sample from respective ones of the sample collection tubes and dispensing the aspirated sample portion into respective reaction wells of the cuvette (50) at the sample insertion station;
transporting the cuvettes (50) to a reagent insertion statio, (16, 18, 20);
aspirating selected amounts of selected reagents from the reagent containers and dispensing the aspirated reagents into respective reaction wells of the cuvettes (50) at the reagent insertion station (16, 18, 20) according to the programmed test for the sample in the respective reaction wells, the reagent and sample in a reaction well forming a reaction volume which exhibits optical characteristics to be monitored by the instrument; and
transporting the cuvettes to the optical monitoring station (22) for optically monitoring changes in optical characteristics of the reaction volumes in the respective reaction wells of the cuvettes.

17. A method as defined in claim 16, wherein said steps of transporting the sample collection tubes (158) to the programming station (30) and to the sample insertion station (14) include transporting the sample collection tubes within the confines of the temperature controlled housing (26).

18. A method as defined in claim 16, wherein said steps of transporting the cuvettes (50) include transporting the cuvettes along a linear path (13).

19. A method as defined in claim 16, wherein said step of storing in a temperature controlled housing (26) includes maintaining the temperature of the housing at between 4°C and 8 °C.

20. A method as defined in claim 16, wherein said sample collection tube (158) are evacuated sample collection tubes each being vacuum sealed by a septum (156) and said sample insertion station (14) includes a piercer (34) for piercing the septum (156) of the respective evacuated sample collection tubes, and said method further includes the step of piercing the septum sealing respective ones of the sample collection tubes to permit a sample to be aspirated therefrom.

21. A method as defined in claim 16, wherein the optical monitoring station includes a plurality of optical channels (194) each having an optical path (194) along which optical characteristics ar monitored, and said step of transporting the cuvettes includes moving the cuvettes to advance the reaction wells from one optical channel to the next so that the reaction volumes can be optically monitored in each optical channel.

## Patentansprüche

1. Probenbearbeitungssystem für ein Instrument zur optischen Bewertung, welches ein optisches Überwachungsmittel (22) aufweist, das einen optischen Weg (194) zur Überwachung von Veränderungen in den optischen Charakteristika eines Reaktionsvolumens in einem Reaktionsraum einer Küvette (50) aufweist, wenn die Küvette in dem optischen Weg des optischen Überwachungsmittels angeordnet ist:
mit einem Küvettenspeicher (10) zur Aufnahme einer Vielzahl von Küvetten (50), wobei jede Küvette eine Vielzahl von Reaktionsgefässen aufweist,
mit einem temperaturgesteuerten Gehäuse (26) zur Aufnahme einer Vielzahl von Reagenzbehältern (172), wobei jeder jeweils ein Reagenz aufweist, und einer Vielzahl von Probensammelröhrchen (158), wobei jedes eine Flüssigkeitsprobe beinhaltet und einen optisch abtastbaren Code aufweist, der die Probe identifiziert und den mit der Probe durchzuführenden Test angibt,
mit einer Programmierstation (30) mit Mitteln (32) zum optischen Abtasten des von den jeweiligen Probenröhrchen (158) vorgelegten Codes zur Programmierung des Instrumentes hinsichtlich des mit einer in einem der jeweiligen Probenröhrchen enthaltenen Probe durchzuführenden Tests,
mit einer Probeneinführungsstation (14) mit einem Mittel (36) zum Absaugen eines Teils einer Probe aus einer der besagten Probensammelröhrchen und zur Abgabe des abgesaugten Anteils einer Probe in ein Reaktionsbehältnis einer Küvette,
mit einer Reagenzstation (16, 18, 20) mit einem die Reagenzien bearbeitenden Mittel (38, 40, 42) zum Absaugen von ausgewählten Mengen von ausgewählten Reagenzien aus den besagten Reagenzbehältern und zur Abgabe der abgesaugten Reagenzien in einem Reaktionsraum einer Küvette (50) gemäss dem programmierten Test für die Probe in diesem Reaktionsraum, wobei das Reagenz und die Probe in dem Reaktionsraum ein Reaktionsvolumen ausbilden, welches optische Charakteristika zeigt, die vom dem Instrument zu überwachen sind,
mit einer ersten Transporteinrichtung zum Transport der Probensammelröhrchen (158) der Reihe nach in die Programmierstation (30) und anschliessend zur Probeneinführungsstation (14), und
mit einer zweiten Transporteinrichtung (12) zum Transport der Küvetten (50) der Reihe nach durch die Probeneinführungsstation (14), die besagte Reagenzstation (16, 18, 20) und zu der optischen Überwachungseinrichtung (22) hin, um dort die optischen Charakteristika des Reaktionsvolumens in den jeweiligen Reaktionsräumen zu überwachen.

2. Probenbearbeitungssystem nach Anspruch 1, dadurch gekennzeichnet, dass das besagte in seiner Temperatur gesteuerte Gehäuse (26) die Temperatur der besagten Probenröhrchen (158) und der besagten Reagenzbehälter (172) zwischen 4° Celsius und 8° Celsius hält.

3. Probenbearbeitungssystem nach Anspruch 1, dadurch gekennzeichnet, dass die zweite Transporteinrichtung (12) eine Führungsschiene (13) zum Führen der Küvetten (50) und ein Antriebsmittel (88, 90, 92) zum periodischen Bewegen der besagten Küvetten entlang der Führungsschiene in diskreten Schritten umfasst.

4. Probenbearbeitungssystem nach Anspruch 3, dadurch gekennzeichnet, dass die Küvettenspeichermittel (10) ein Mittel (52) zum Entfernen der besagten Küvetten aus dem besagten Küvettenspeichermittel und zum Anordnen der besagten Küvetten auf der besagten Führungsschiene (13) aufweisen.

5. Probenbearbeitungssystem nach Anspruch 3, dadurch gekennzeichnet, dass die besagte Führungsschiene (13) eine lineare Führungsschiene ist.

6. Probenbearbeitungssystem nach Anspruch 5, dadurch gekennzeichnet, dass die zweite Transporteinrichtung (12) eine Verstellschraubenspindel (88) umfasst und dass die Küvetten (50) mit einem Eingriffsmittel ausgestaltet sind, um in das Gewinde der Verstellschraubenspindel einzugreifen, so dass die Küvetten durch die Verstellschraubenspindel entlang der linearen Führungsschiene (13) bewegt werden können.

7. Probenbearbeitungssystem nach Anspruch 1, dadurch gekennzeichnet, dass die erste Transporteinrichtung mindestens ein Schiffchen (28), das jeweils Mittel (159) zum Halten einer Vielzahl von Probensammelröhrchen (158) umfasst, und Mittel zur Bewegung des mindestens einen Schiffchens (28) durch die Programmierstation (30) und durch die Probeneinführungsstation (14) aufweist.

8. Probenbearbeitungssystem nach Anspruch 1, dadurch gekennzeichnet, dass die Probensammelröhrchen (158) evakuierte Probensammelröhrchen umfassen, die jeweils durch ein Septum (156) abgeschlossen sind, und dass an der besagten Einführungsstation (14) ein durchstossendes Mittel (34) vorgesehen ist, um das Septum (156) zu durchstossen, welches eines der jeweiligen evakuierten Probenröhrchen (158) abschliesst.

9. Probenbearbeitungssystem nach Anspruch 8, dadurch gekennzeichnet, dass die Probenmaterial absaugenden Mittel einen hohlen Probenaufnehmer (36) umfassen und dass das besagte durchstossende Mittel (34) ein durchstossendes Röhrchen zum Durchstossen des Septums (156) von einer der besagten Probenröhrchen und zum Eröffnen eines Weges aufweist, um es dem Probenaufnehmer (36) zu gestatten, Zugang zu dem Inneren des besagten Probenröhrchens (158) zu erhalten, um einen Probenanteil aus dem besagten Probenröhrchen abzusaugen.

10. Probenbearbeitungssystem nach Anspruch 1, dadurch gekennzeichnet, dass es weiterhin Mittel (17) aufweist, um das Reaktionsvolumen in einem Reaktionsbehältnis einer Küvette (50) auf Körpertemperatur aufzuheizen.

11. Probenbearbeitungssystem nach Anspruch 10, dadurch gekennzeichnet, dass die zweiten Transportmittel (12) eine lineare Führungsschiene (13) aufweisen, entlang der die besagten Küvetten (50) voranbewegt werden, und dass die besagten Heizmittel (17) Mittel umfassen, um einen Abschnitt dieser linearen Führungsschiene (13) aufzuheizen, wobei die Reaktionsvolumina in den besagten Küvetten durch Wärme aufgeheizt werden, die von der besagten linearen Führungsschiene (13) geleitet wird.

12. Probenbearbeitungssystem nach Anspruch 1, dadurch gekennzeichnet, dass das Reagenzbearbeitungssystem Reagenzprobennehmer (38) umfasst, um ein Reagenz aufzusaugen und abzugeben, und dass die besagte Reagenzstation weiterhin eine Abdeckung (176) umfasst, die die besagten Reagenzbehälter (172) abdeckt, wobei diese Abdeckung Probenlöcher (178) umfasst, die mit jeweiligen Öffnungen der besagten Reagenzbehälter fluchtend ausgerichtet sind, um einen Weg für die besagten Reagenzprobennehmer (38, 40, 42) zu schaffen, damit diese auf die Reagenzien in den besagten Reagenzbehältern Zugriff haben.

13. Probenbearbeitungssystem nach Anspruch 12, dadurch gekennzeichnet, dass die Probenlöcher (178) in der besagten Abdeckung in ihrem Durchmesser leicht grösser als der Durchmesser der Reagenzprobennehmer (38, 40, 42) sind und dass die besagte Abdeckung (176) von genügender Dicke ist, um in wirksamer Weise eine Verdunstung von Reagenzien aus den besagten Reagenzbehältern zu verhindern und um Temperaturveränderungen der Reagenzien in den besagten Reagenzbehältern zu verzögern.

14. Probenbearbeitungssystem nach Anspruch 1, dadurch gekennzeichnet, dass es mit einem Mittel zur optischen Überwachung (22) eine Kombination bildet, das mindestens einen optischen Weg (194) aufweist, um Veränderungen der optischen Charakteristika der Reaktionsvolumina in den jeweiligen Reaktionsräumen der besagten Küvetten (50) zu überwachen, wobei das besagte zweite Transportmittel (12) die Küvetten (50) derart bewegt, dass die Reaktionsräume der besagten Küvetten in dem mindestens einen optischen Weg (194) des besagten Mittels zur optischen Überwachung angeordnet werden.

15. Probenbearbeitungssystem nach Anspruch 14, dadurch gekennzeichnet, dass das Mittel zur optischen Überwachung (22) eine Vielzahl von optischen Kanälen (194) aufweist, die jeweils über einen optischen Weg (194) verfügen, dessen optische Charakteristika überwacht werden, wobei die optischen Wege (194) einer nach dem anderen und quer zu der Richtung angeordnet sind, in der die besagten Küvetten (50) durch das zweite Transportmittel (12) bewegt werden, und dass das besagte zweite Transportmittel die Küvetten so bewegt, dass die besagten Reaktionsbehältnisse von einem optischen Kanal (194) zu dem nächsten vorbewegt werden, so dass die Reaktionsvolumina in jedem optischen Kanal (194) überwacht werden können.

16. Verfahren zur Bearbeitung von Proben für ein Instrument zur optischen Bewertung, welches ein optisches Überwachungsmittel (22) aufweist, das einen optischen Weg (194) zur Überwachung von Veränderungen in den optischen Charakteristika eines Reaktionsvolumens in einem Reaktionsraum einer Küvette aufweist, wenn die Küvette in dem optischen Weg des optischen Überwachungsmittels angeordnet ist, mit den Verfahrensschritten:
Speichern einer Vielzahl von Küvetten (50), wobei jede Küvette eine Vielzahl von Reaktionsräumen aufweist,
Speichern einer Vielzahl von Reagenzbehältern (172) in einem temperaturgesteuerten Gehäuse (26), wobei jeder jeweils ein Reagenz und eine Vielzahl von Probensammelröhrchen (158) aufweist, wobei jedes Probensammelröhrchen eine Flüssigkeitsprobe beinhaltet und einen optisch abtastbaren Code aufweist, der die Probe identifiziert und den mit der Probe durchzuführenden Test angibt,
Transportieren der Probensammelröhrchen (158) zu einer Programmierstation (30) und optisches Abtasten des von den jeweiligen Probensammelröhrchen vorgelegten Codes zum Identifizieren der Probensammelröhrchen und zum Programmieren des Instrumentes hinsichtlich des mit einer in einem der jeweiligen Probenröhrchen enthaltenen Probe durchzuführenden Tests,
Transportieren der Kuvetten (50) zu einer Probeneinführungsstation (14),
Transportieren der Probensammelröhrchen (158) von der Programmierstation (30) zu der Probeneinführungsstation (14) zum Absaugen eines Teils einer Probe aus einer der besagten Probensammelröhrchen und zum Abgeben des abgesaugten Anteils einer Probe in einen jeweiligen Reaktionsraum der Küvette (50) an der Probeneinführungsstation,
Transportieren der Küvetten (50) zu einer Reagenzeinführungsstation (16, 18, 20),
Absaugen von ausgewählten Mengen von ausgewählten Reagenzien aus den Reagenzbehältern und Abgabe der abgesaugten Reagenzien in jeweilige Reaktionsräume der Küvetten (50) an der Reagenzeinführungsstation (16, 18, 20) gemäss dem programmierten Test für die Probe in den jeweiligen Reaktionsräumen, wobei das Reagenz und die Probe in dem Reaktionsraum ein Reaktionsvolumen ausbilden, welches optische Charakteristika zeigt, die vom dem Instrument zu überwachen sind, und
Transportieren der Küvetten zu der optischen Überwachungseinrichtung (22), um dort die Veränderungen der optischen Charakteristika der Reaktionsvolumen in den jeweiligen Reaktionsräumen der Küvetten zu überwachen.

17. Verfahren nach Anspruch 16, dadurch gekennzeichnet, dass die Schritte des Transportierens der Probensammelröhrchen (158) zu der Programmierstation (30) und zu der Probeneinführungsstation (14) den Transport der Probensammelröhrchen innerhalb des in seiner Temperatur gesteuerten Gehäuses (26) beinhaltet.

18. Verfahren nach Anspruch 16, dadurch gekennzeichnet, dass die Schritte des Transportierens der Küvetten (50) den Transport der Küvetten entlang eines linearen Weges (13) umfasst.

19. Verfahren nach Anspruch 16, dadurch gekennzeichnet, dass der besagte Schritt des Speicherns in einem in seiner Temperatur gesteuerten Gehäuse (26) das Halten der Temperatur des Gehäuses zwischen 4° Celsius und 8° Celsius beinhaltet.

20. Verfahren nach Anspruch 16, dadurch gekennzeichnet, dass die Probensammelröhrchen (158) evakuierte Probensammelröhrchen (158) umfassen, die jeweils durch ein Septum (156) abgeschlossen sind, und dass die besagte Einführungsstation (14) einen Dorn (34) aufweist, um das Septum (156) zu durchstossen, welches eines der jeweiligen evakuierten Probenröhrchen (158) abschliesst, wobei das Verfahren weiter den Verfahrensschritt umfasst des Durchstossens des abschliessenden Septum von einem der Probensammelröhrchen, um das Absaugen einer Probe aus diesem zu gestatten.

21. Verfahren nach Anspruch 16, dadurch gekennzeichnet, dass das Mittel zur optischen Überwachung (22) eine Vielzahl von optischen Kanälen (194) aufweist, die jeweils über einen optischen Weg (194) verfügen, dessen optische Charakteristika überwacht werden, wobei das Verfahren den Schritt umfasst des Transportierens der Küvetten, so dass die Reaktionsräume von einem optischen Kanal zu dem nächsten vorbewegt werden, so dass die Reaktionsvolumina in jedem optischen Kanal überwacht werden können.

## Revendications

1. Système de manipulation d'échantillons pour un instrument d'évaluation optique, comprenant un moyen de surveillance optique (22) ayant un chemin optique (194) servant à surveiller des modifications de caractéristiques optiques d'un volume de réaction contenu dans un puits de réaction d'une cuvette (50), lorsque la cuvette est placée dans le chemin optique du moyen de surveillance optique, comprenant :
un moyen de stockage de cuvette (10) servant à stocker une pluralité de cuvettes (50), ladite cuvette contenant une pluralité de puits de réaction;
un boîtier (26) à température contrôlée servant à stocker une pluralité de récipients de réactifs (172), contenant chacun un réactif respectif, et une pluralité de tubes dc collecte d'échantillons (158), chaque dit tube de collecte d'échantillons contenant un échantillon fluide et un code susceptible d'être balayé optiquement, identifiant l'échantillon et un test à effectuer sur l'échantillon;
un poste de programmation (30) comprenant un moyen de balayage optique (32) servant à lire le code présenté par les tubes de collecte d'échantillons (158) respectifs, afin de programmer l'instrument avec un test devant être effectué sur l'échantillon contenu dans un tube respectif parmi lesdits tubes de collecte d'échantillons;
un poste d'insertion d'échantillon (14) comprenant un moyen (36) servant à aspirer une partie de l'échantillon depuis des tubes respectifs parmi lesdits tubes de collecte d'échantillons et à distribuer la partie d'échantillon aspirée dans un puits de réaction d'une cuvette:
un poste de réactif (16, 18, 20) comprenant un moyen de manipulation de réactif(38, 40, 43) servant à aspirer des quantités sélectionnées de réactifs sélectionnés. obtenues à partir desdits récipients de réactifs, dans un puits de réaction d'une cuvette (50), selon le test programmé pour l'échantillon contenu dans ce puits de réaction, le réactif et l'échantillon contenu dans le puits de réaction formant un volume de réaction présentant des caractéristiques optiques devant être surveillées par l'instrument;
un premier moyen de transport servant à transporter les tubes de collecte d'échantillons (158) successivement d'abord vers ledit poste de programmation (30) et, ensuite, vers ledit poste d'insertion d'échantillon (14); et
un deuxième moyen de transport (12) servant à transporter ladite cuvette (50) successivement en passant par ledit poste d'insertion d'échantillon (14) et ledit poste de réactif (16, 18, 20) et vers le moyen de surveillance (22), afin de surveiller les caractéristiques optiques du volume de réaction contenu dans les puits de réaction respectifs.

2. Système de manipulation d'échantillons selon la revendication 1, dans lequel ledit boîtier à température contrôlée (26) maintient la température desdits tubes de collecte d'échantillons (158) et desdits récipients de réactifs (172) dans la plage comprise entre 4°C et 8°C.

3. Système de manipulation d'échantillons selon la revendication 1, dans lequel ledit deuxième moyen de transport (12) comprend une piste (13) servant à guider les cuvettes (50) et un moyen d'entraînement (88, 90, 92) servant à déplacer périodiquement lesdites cuvettes le long de ladite piste, selon des incréments discrets.

4. Système de manipulation d'échantillons selon la revendication 3, dans lequel ledit moyen de stockage de cuvette (10) comprend un moyen d'enlèvement (52) servant à retirer lesdites cuvettes depuis ledit moyen de stockage et plaçant lesdites cuvettes sur ladite piste (13).

5. Système de manipulation d'échantillons selon la revendication 3, dans lequel ladite piste (13) est une piste rectiligne.

6. Système de manipulation d'échantillons selon la revendication 5, dans lequel ledit deuxième moyen de transport (12) comprend une vis d'amenée (88) et lesdites cuvettes (50) comprennent chacune un moyen d'engagement servant à s'engager contre les filetages de ladite vis d'amenée, de manière que lesdites cuvettes puissent être entraînées par ladite vis d'amenée, le long de ladite piste rectiligne (13).

7. Système de manipulation d'échantillons selon la revendication 1, dans lequel ledit premier moyen de transport comprend au moins une navette (28) comportant un moyen (159) servant à maintenir une pluralité de tubes de collecte d'échantillons (158), et un moyen servant à déplacer ladite au moins une navette (28) via lesdits postes de programmation (30) et d'insertion d'échantillon (14).

8. Système de manipulation d'échantillons selon la revendication 1, dans lequel lesdits tubes de collecte d'échantillons (158) comprennent des tubes de collecte d'échantillons mis sous vide, chaque tube étant isolé hermétiquement par un diaphragme (156), et ledit poste d'insertion d'échantillons (14) comprend un moyen de percée (34) servant à percer le diaphragme (156) fermant hermétiquement des tubes respectifs parmi lesdits tubes de collecte d'échantillons (158).

9. Système de manipulation d'échantillons selon la revendication 8, dans lequel ledit moyen d'aspiration d'échantillons comprend une sonde d'échantillon (36) creuse; et ledit moyen de percée (34) comprend un tube de percée servant à percer le diaphragme (156) de tubes respectifs parmi lesdits tubes de collecte d'échantillons et formant un chemin permettant à ladite sonde d'échantillon (36) d'accéder à l'intérieur dudit tube de collecte d'échantillons (158), afin d'aspirer une partie d'échantillon depuis ledit tube de collecte d'échantillons.

10. Système de manipulation d'échantillons selon la revendication 1, comprenant en outre un moyen (17) servant à chauffer à la température du corps le volume de réaction contenu dans un puits de réaction d'une cuvette (50).

11. Système de manipulation d'échantillons selon la revendication 10, dans lequel ledit deuxième moyen de transport (12) comprend une piste rectiligne (13) le long de laquelle lesdites cuvettes(50) sont avancées, et ledit moyen de chauffage (17) comprend un moyen servant à chauffer une partie de ladite piste rectiligne, les volumes de réaction contenus dans lesdites cuvettes étant chauffés au moyen d'une chaleur véhiculée par ladite piste rectiligne (13).

12. Système de manipulation d'échantillons selon la revendication 1, dans lequel ledit moyen de manipulation de réactifs comprend des sondes de réactifs (38) servant à aspirer et à distribuer un réactif, et ledit poste de réactif comprend, en outre, une plaque (176) recouvrant lesdits récipients de réactifs (172), ladite plaque comprenant des trous de sonde (178) alignés avec des récipients respectifs parmi lesdits récipients de réactifs, afin de former un chemin pour lesdites sondes de réactifs (38, 40, 42) permettant d'accéder au réactif contenu dans lesdits récipients de réactifs.

13. Système de manipulation d'échantillons selon la revendication 12, dans lequel les trous de sonde (178) ménagés dans ladite plaque présentent un diamètre légèrement supérieur au diamètre desdites sondes de réactifs (38, 40, 42) et ladite plaque (176) présente une épaisseur suffisante pour empêcher efficacement toute évaporation des réactifs depuis lesdits récipients de réaction et pour retarder les dérives de température des réactifs dans lesdits récipients de réactifs.

14. Système de manipulation d'échantillons selon la revendication 1, formant une combinaison avec un moyen de surveillance optique (22) ayant au moins un chemin optique (194) afin de surveiller les modifications de caractéristiques optiques de volumes de réaction contenus dans des puits de réaction respectifs desdites cuvettes (50), ledit deuxième moyen de transport (12) déplaçant lesdites cuvettes (50) afin de placer les puits de réaction desdites cuvettes dans au moins un chemin optique (194) dudit moyen de surveillance optique.

15. Système de manipulation d'échantillons selon la revendication 14, dans lequel ledit moyen de surveillance optique (22) comprend une pluralité de canaux optiques (194) ayant chacun un chemin optique (194) le long duquel sont surveillées des caractéristiques optiques, lesdits chemins optiques (194) étant disposés les uns après les autres et transversalement à la direction dans laquelle sont déplacées lesdites cuvettes (50) par ledit deuxième moyen de transport (12), et ledit deuxième moyen de transport déplaçant lesdites cuvettes afin de faire avancer lesdits puits de réaction depuis un canal optique (194) vers le suivant, de manière que les volumes de réaction puissent être surveillés optiquement dans chaque canal optique (194).

16. Procédé de manipulation d'échantillons pour un système d'évaluation optique, comprenant un moyen de surveillance optique (22) ayant un chemin optique (194) servant surveiller des modifications de caractéristiques optiques d'un volume de réaction contenu dans un puits de réaction d'une cuvette, lorsque la cuvette est placée dans le chemin optique du moyen de surveillance optique, comprenant :
le stockage d'une pluralité de cuvettes (50) contenant chacune une pluralité de puits de réaction;
le stockage, dans un boîtier température contrôlée (26), d'une pluralité de récipients de réactifs (172) contenant chacun un réactif respectif et une pluralité de tubes de collecte d'échantillons (158), chaque tube de collecte d'échantillons contenant un échantillon fluide et présentant un code susceptible d'être balayé optiquement. identifiant l'échantillon et un test devant être effectué sur l'échantillon:
le transport des tubes de collecte d'échantillons (158) vers un poste de programmation (30) et la lecture optique du code présenté par des tubes respectifs parmi les tubes de collecte d'échantillons, afin d'identifier les tubes de collecte d'échantillons et de programmer l'instrument avec un test devant être effectué sur les échantillons contenus dans des tubes respectifs parmi les tubes de collecte d'échantillons;
le transport des cuvettes (50) vers un poste d'insertion d'échantillon (14);
le transport des tubes de collecte d'échantillons (158) depuis le poste de programmation (30) vers le poste d'insertion d'échantillon (14), afin d'aspirer une partie de l'échantillon depuis les tubes respectifs parmi les tubes de collecte d'échantillons et la distribution de la partie d'échantillon aspirée dans des puits de réaction respectifs de la cuvette (50), au niveau du poste d'insertion d'échantillon;
le transport des cuvettes (50) vers un poste d'insertion de réactif (16, 18, 20);
l'aspiration de quantités sélectionnées de réactifs, sélectionnés depuis les récipients de réactifs, et la distribution des réactifs, aspirés dans des puits de réaction respectifs des cuvettes (50), au niveau du poste d'insertion de réactif (16, 18, 20), selon le test programmé pour l'échantillon contenu dans les puits de réaction respectifs, le réactif et l'échantillon contenus dans un puits de réaction formant un volume de réaction qui présente des caractéristiques optiques devant être surveillées par l'instrument; et
le transport des cuvettes vers le poste de surveillance optique (22) afin de surveiller optiquement des modifications des caractéristiques optiques des volumes de réaction dans des puits de réaction respectifs des cuvettes.

17. Procédé selon la revendication 16, dans lequel lesdites étapes de transport des tubes de collecte d'échantillons (158) vers le poste de programmation (30) et vers le poste d'insertion d'échantillon (14) comprennent le transport des tubes de collecte d'échantillons dans les délimitations du boîtier à température contrôlée (26).

18. Procédé selon la revendication 16, dans lequel lesdites étapes de transport de cuvettes (50) comprennent le transport des cuvettes suivant un chemin rectiligne (13).

19. Procédé selon la revendication 16, dans lequel ladite étape de stockage dans un boîtier à température contrôlée (26) comprend le maintien de la température du boîtier dans une plage comprise entre 4°C et 8°C.

20. Procédé selon la revendication 16, dans lequel lesdits tubes de collecte d'échantillons (158) sont des tubes de collecte d'échantillons mis sous vide, chaque tube étant fermé hermétiquement par un diaphragme (156), et ledit poste d'insertion d'échantillon (14) comprend un élément de perçage (34), afin de percer le diaphragme (156) des tubes d'échantillons mis sous vide respectifs, et ledit procédé comprend en outre l'étape de percée du diaphragme fermant hermétiquement des tubes respectifs parmi les tubes de collecte d'échantillons, afin de permettre à un échantillon d'en être aspiré.

21. Procédé selon la revendication 16, dans lequel le poste de surveillance optique comprend une pluralité de canaux optiques (194) ayant chacun un chemin optique (194) le long duquel sont surveillées des caractéristiques optiques, et ladite étape de transport de cuvette comprend le déplacement des cuvettes afin de faire avancer les puits de réaction depuis un canal optique vers le suivant, de manière que les volumes de réaction puissent être surveillés optiquement dans chaque canal optique.
